# EUROPEAN PATENT SPECIFICATION

(11) **EP 3 002 918 B1**
(45) Date of publication and mention of the grant of the patent: **14.08.2019**
(21) Application number: 13887708.9
(22) Date of filing: 28.06.2013
(51) Int. Cl.: H04L 12/925, H04L 29/08

(54) **TIME-BASED SERVICE PROCESSING METHOD AND DEVICE**
DIENSTVERARBEITUNGSVERFAHREN UND -VORRICHTUNG AUF ZEITBASIS
PROCÉDÉ ET DISPOSITIF DE TRAITEMENT DE SERVICE EN FONCTION DU TEMPS

(43) Date of publication of application: 06.04.2016
(60) Divisional application: 19182881.3
(73) Proprietor: Huawei Technologies Co., Ltd., Longgang District Shenzhen, Guangdong 518129 (CN)
(72) Inventor: ZHENG, Haomian, Shenzhen Guangdong 518129 (CN); HAN, Jianrui, Shenzhen Guangdong 518129 (CN); LIN, Yi, Shenzhen Guangdong 518129 (CN)
(74) Representative: Pfenning, Meinig & Partner mbB
(86) International application number: PCT/CN2013/078354
(87) International publication number: WO 2014/205773

(56) References cited:
- EP-A1- 2 461 547
- CN-A- 101 207 630
- CN-A- 101 227 363
- CN-A- 103 051 565
- CN-A- 103 179 046
- US-A1- 2013 144 973

## Description

### TECHNICAL FIELD

The present invention relates to communications technologies, and in particular, to a scheduled service processing method and an apparatus.

### BACKGROUND

A software-defined network (Software Defined Network, SDN for short) is a new type of innovative network architecture, which implements flexible control over network traffic by separating a control plane of a network device from a data plane. The SDN involves an application layer controller, a network layer controller, a transport network, and a network management system.

Transmission of a scheduled service is not started immediately when a service demand is generated; instead, transmission from one node to another node is completed in a specified time interval. In the prior art, when a network layer controller receives a scheduled service request from an application layer controller, the network layer controller calculates a transmission path according to a current network status when the service request is received, reserves a path resource, and notifies the application layer controller that transmission path calculation and path resource reservation are successful. When a specified service start time arrives, transmission of a scheduled service is started, and the network layer controller configures the path resource according to the calculated path to complete transmission.

Because both the path and the path resource that are used to transmit the scheduled service are an optimal path that is calculated by the network layer controller according to the current network status when the service request is received, when the specified service start time arrives, the network status may have already changed and a preferred path may appear, but transmission of the scheduled service is still completed according to the previously calculated path, the service is not transmitted by using the optimal path in a network, and a network resource is not used efficiently.

CN101207630A discloses a method of dynamic route selection of the Signaling System No. 7(SS7) with an application layer controllable, in which a network layer dynamically selects an available signaling route by a route table. The method includes: first, the application layer sends a request message to the network layer, and then the network sends back a route selection result corresponding to the request message. Finally, the application layer adjusts a routing table according to the route selection result and the content of the route table.

US2013/144973A1 discloses a method for performing network transfer adaptive optimization in a large-scale parallel computing system, which includes forming a message to be transferred through the network based on obtained information related to a task executed by computing nodes, wherein the message includes identification information of the computing nodes to perform data transfer and corresponding sink nodes, and an amount of data the computing nodes to transfer to the corresponding sink nodes; transferring the message to a network layer; and forming a new data transfer pattern for data transfer between the computing nodes and the corresponding sink nodes in accordance with the received message.

### SUMMARY

The present invention is defined by the independent claims 1, 4, 6, 9 and 11. Further preferred embodiments are given in the dependent claims. Embodiments of the present invention provide a scheduled service processing method and an apparatus, to monitor a path resource in a network in real time, so that a path resource used to transport a scheduled service is optimal.

According to a first aspect, an embodiment of the present invention provides a scheduled service processing method, including:
within a time interval from t₁ to t₂, if a second transport path that can satisfy a service demand is acquired based on an available network resource, reserving, by a network layer controller, the network resource for the second transport path, and reporting, by the network layer controller, the second transport path to an application layer controller, so that the application layer controller can select one path between the second transport path and a first transport path as a target transport path; and
receiving, by the network layer controller, the target transport path sent by the application layer controller, and executing transport of a service by using the target transport path, where
t₁ is a time at which the application layer controller sends the service demand, t₂ is a time at which the service is started, and the first transport path is a transport path that satisfies the service demand and that is acquired before the second transport path.

In a first possible implementation manner of the first aspect, after the receiving the target transport path sent by the application layer controller, the method further includes:
releasing a network resource reserved for the transport path that is not selected as the target transport path.

With reference to the first aspect or the first possible implementation manner of the first aspect, in a second possible implementation manner, the method further includes:
receiving the service demand that is sent by the application layer controller at the time t₁, where the service demand includes at least the time t₂ at which the service is started, a time t₃ at which the service is finished, a requested bandwidth resource, information about a source node, and information about at least one destination node; and
acquiring the first transport path that can satisfy the service demand, reserving a network resource for the first transport path, and reporting the first transport path to the application layer controller.

According to a second aspect, an embodiment of the present invention provides a scheduled service processing method, including:
sending, by an application layer controller, a service demand to a network layer controller, and successively receiving, by the application layer controller, a first transport path and a second transport path that can satisfy the service demand and that are reported by the network layer controller, where the first transport path is a transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
selecting, by the application layer controller, one of the second transport path and the first transport path as a target transport path, and sending, by the application layer controller, the target transport path to the network layer controller.

In a first possible implementation manner of the second aspect, the service demand includes at least the time t₂ at which the service is started, a time t₃ at which the service is finished, a requested bandwidth resource, information about a source node, and information about at least one destination node.

According to a third aspect, an embodiment of the present invention provides a network layer controller, including:
a processing module, configured to: within a time interval from t₁ to t₂, if a second transport path that can satisfy a service demand is acquired based on an available network resource, reserve the network resource for the second transport path, and transport the service by using a target transport path;
a sending module, configured to report the second transport path to an application layer controller, so that the application layer controller can select one path between the second transport path and a first transport path as the target transport path; and
a receiving module, configured to receive the target transport path sent by the application layer controller, where
t₁ is a time at which the application layer controller sends the service demand, t₂ is a time at which the service is started, and the first transport path is a transport path that satisfies the service demand and that is acquired before the second transport path.

In a first possible implementation manner of the third aspect, the processing module is further configured to:
release a network resource reserved for the transport path that is not selected as the target transport path.

With reference to the third aspect or the first possible implementation manner of the third aspect, in a second possible implementation manner, the receiving module is further configured to receive the service demand that is sent by the application layer controller at the time t₁, where the service demand includes at least the time t₂ at which the service is started, a time t₃ at which the service is finished, a requested bandwidth resource, information about a source node, and information about at least one destination node; and
the processing module is further configured to acquire the first transport path that can satisfy the service demand, and reserve a network resource for the first transport path, and the sending module is further configured to report the first transport path to the application layer controller.

According to a fourth aspect, an embodiment of the present invention provides an application layer controller, including:
a sending module, configured to send a service demand to a network layer controller, and send a target transport path to the network layer controller;
a receiving module, configured to successively receive a first transport path and a second transport path that can satisfy the service demand and that are reported by the network layer controller, where the first transport path is a transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processing module, configured to select one path between the second transport path and the first transport path as the target transport path.

In a first possible implementation manner of the fourth aspect, the service demand includes at least the time t₂ at which the service is started, a time t₃ at which the service is finished, a requested bandwidth resource, information about a source node, and information about at least one destination node.

According to a fifth aspect, an embodiment of the present invention provides a network layer controller, including:
a processor, configured to: within a time interval from t₁ to t₂, if a second transport path that can satisfy a service demand is acquired based on an available network resource, reserve the network resource for the second transport path, and transport the service by using a new target transport path;
a transmitter, configured to report the second transport path to an application layer controller, so that the application layer controller can select one path between the second transport path and a first transport path as the new target transport path; and
a receiver, configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

According to a sixth aspect, an embodiment of the present invention provides an application layer controller, including:
a transmitter, configured to send a service demand to a network layer controller, and send a new target transport path to the network layer controller;
a receiver, configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processor, configured to select one path between the second transport path and the first transport path as the new target transport path.

According to a seventh aspect, an embodiment of the present invention provides a scheduled service processing system, where the system includes at least the network layer controller provided in the third aspect, the first possible implementation manner of the third aspect, or the second possible implementation manner of the third aspect in the present invention and the application layer controller provided in the fourth aspect or the first possible implementation manner of the fourth aspect in the present invention.

According to the scheduled service processing method and the apparatus that are provided in the embodiments of the present invention, within a time interval from t₁ to t₂, if a second transport path that can satisfy a service demand is acquired based on an available network resource, the network resource is reserved for the second transport path, and the second transport path is reported to an application layer controller, so that the application layer controller can select one path between the second transport path and a first transport path as a new target transport path; and the new target transport path sent by the application layer controller is received, and the service is transported according to the new target transport path, thereby implementing real-time monitoring of a path resource in a network, so that a path resource used to transport a scheduled service is optimal.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of composition of SDN according to an embodiment of the present invention;
FIG. 2 is a flowchart of Embodiment 1 of a scheduled service processing method according to the present invention;
FIG. 3 is a flowchart of Embodiment 2 of a scheduled service processing method according to the present invention;
FIG. 4 is a flowchart of Embodiment 3 of a scheduled service processing method according to the present invention;
FIG. 5 is a diagram of a network topology according to Embodiment 4 of the present invention;
FIG. 6 is a diagram of a network topology according to Embodiment 5 of the present invention;
FIG. 7 is a schematic structural diagram of Embodiment 1 of a network layer controller according to the present invention;
FIG. 8 is a schematic structural diagram of Embodiment 1 of an application layer controller according to the present invention;
FIG. 9 is a schematic structural diagram of Embodiment 2 of a network layer controller according to the present invention;
FIG. 10 is a schematic structural diagram of Embodiment 2 of an application layer controller according to the present invention; and
FIG. 11 is a schematic structural diagram of a scheduled service processing system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

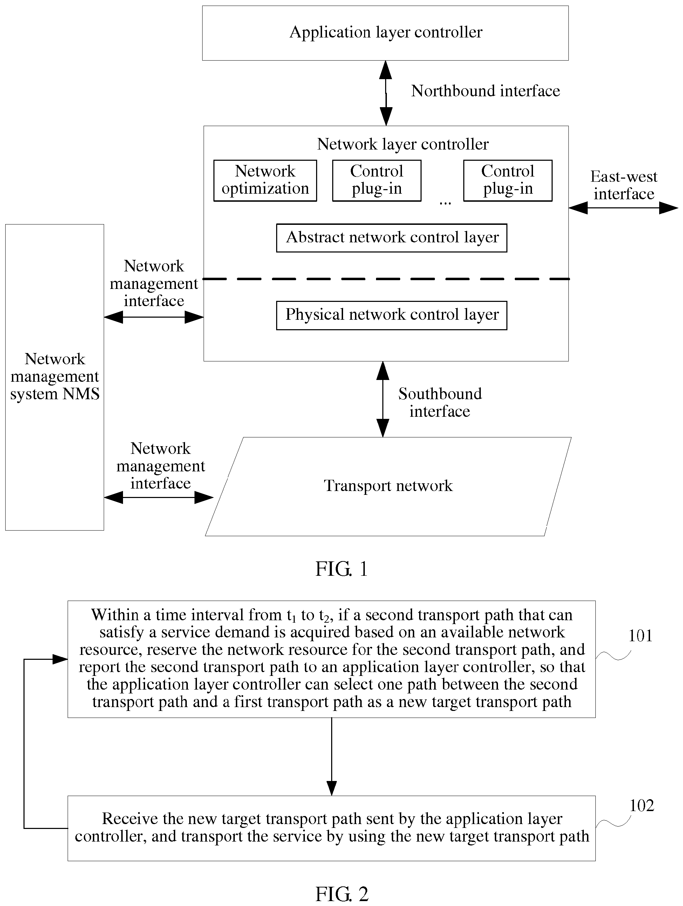

FIG. 1 is a schematic structural diagram of composition of SDN according to an embodiment of the present invention. As shown in FIG. 1, a scheduled service processing method provided in this embodiment of the present invention may be specifically implemented by a network optimization module, where the network optimization module is integrated into a network layer controller.

FIG. 2 is a flowchart of Embodiment 1 of a scheduled service processing method according to the present invention. As shown in FIG. 2, the method provided in this embodiment may be specifically implemented by a network layer controller, and the method may specifically include:
S101: Within a time interval from t₁ to t₂, if a second transport path that can satisfy a service demand is acquired based on an available network resource, reserve the network resource for the second transport path, and report the second transport path to an application layer controller, so that the application layer controller can select one path between the second transport path and a first transport path as a new target transport path.

t₁ is a time at which the application layer controller sends the service demand, t₂ is a time at which the service is started, and the first transport path is a target transport path that satisfies the service demand and that is acquired before the second transport path.

The available network resource is a network resource other than a network resource that has already been reserved. In this embodiment, the available network resource may be specifically a network resource other than a network resource reserved for the target transport path.

In an actual application process, the service demand may include the time t₂ at which the service is started, a time t₃ at which the service is finished, a requested bandwidth resource, information about a source node, and information about at least one destination node. The network layer controller may determine a transport path based on the available network resource and according to the bandwidth resource requested for completing transmission of the service within a time interval from t₂ to t₃ and the information about the source and destination nodes.

In this step, the second transport path may be a path that is different from the first transport path and that is better than the first transport path. Within the time interval from t₁ to t₂, the network layer controller may acquire, based on the available network resource, multiple second transport paths that can satisfy the service demand, and the network layer controller may report only a path that is better than a target transport path to the application layer controller. When the second transport path is reported to the application layer controller, a report message may carry the requested bandwidth resource and the specific path, and a person skilled in the art may understand that if the report message does not carry the specific path, the report message needs to carry information about a source node and information about a destination node. Optionally, the report message may further include latency information, jitter information, or information about a quantity of hops. A network parameter of the second transport path is better than that of the first transport path, for example, regarding the network parameter, the second transport path has less hops and/or shorter latency than the first transport path, which is not limited in this embodiment.

S102: Receive the new target transport path sent by the application layer controller, and transport the service by using the new target transport path.

Within the time interval from t₁ to t₂, if detecting that a resource on a transport path is released, the network layer controller performs S101 repeatedly until the time t₂ arrives, and executes service transport according to the target transport path.

According to the scheduled service processing method provided in this embodiment, within a time interval from t₁ to t₂, if a second transport path that can satisfy a service demand is acquired based on an available network resource, the network resource is reserved for the second transport path, and the second transport path is reported to an application layer controller, so that the application layer controller can select one path between the second transport path and a first transport path as a new target transport path; and the new target transport path sent by the application layer controller is received, and the service is transported by using the new target transport path, thereby implementing real-time monitoring of a path resource in a network, so that a path resource used to transport a scheduled service is optimal.

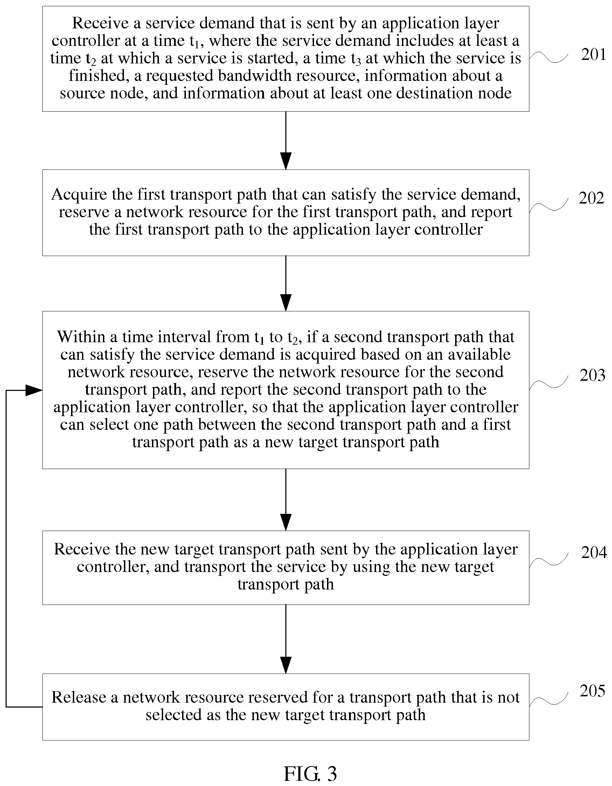

FIG. 3 is a flowchart of Embodiment 2 of a scheduled service processing method according to the present invention. As shown in FIG. 3, the method provided in this embodiment may be specifically implemented by a network layer controller, and the method may specifically include:
S201: Receive a service demand that is sent by an application layer controller at a time t₁, where the service demand includes at least a time t₂ at which a service is started, a time t₃ at which the service is finished, a requested bandwidth resource, information about a source node, and information about at least one destination node.

There is at least one service demand. When receiving multiple service demands, the network layer controller may successively acquire, according to a time at which the service demands are received, transport paths that can satisfy the service demands.

In this embodiment, the time t₁ is a time at which the application layer controller sends the service demand, the time t₂ is a time at which the service is started, the time t₃ is a time at which the service is finished, and a first transport path is a target transport path that satisfies the service demand and that is acquired by the network layer controller before a second transport path.

S202: Acquire the first transport path that can satisfy the service demand, reserve a network resource for the first transport path, and report the first transport path to the application layer controller.

A report message reported by the network layer controller to the application layer controller may include resource reservation success information and the specific path, and a person skilled in the art may understand that if the report message does not carry the specific path, the report message needs to carry information about a source node and information about a destination node.

S203: Within a time interval from t₁ to t₂, if a second transport path that can satisfy the service demand is acquired based on an available network resource, reserve the network resource for the second transport path, and report the second transport path to the application layer controller, so that the application layer controller can select one path between the second transport path and a first transport path as a new target transport path.

S204: Receive the new target transport path sent by the application layer controller, and transport the service by using the new target transport path.

Within the time interval from t₁ to t₂, if detecting that a resource on a transport path is released, the network layer controller performs S203 repeatedly until the time t₂ arrives, and executes service transport according to the target transport path.

S205: Release a network resource reserved for the transport path that is not selected as the new target transport path.

If the application layer controller selects the second transport path as the new target transport path, the network layer controller releases a network resource reserved for the first transport path; similarly, if the application layer controller selects the first transport path as the new target transport path, the network layer controller releases a network resource reserved for the second transport path.

According to the scheduled service processing method provided in this embodiment, a network layer controller receives a service demand that is sent by an application layer controller at a time t₁, acquires a first transport path that can satisfy the service demand, reports the first transport path to the application layer controller, and reserves a network resource for the first transport path; within a time interval from t₁ to t₂, when the network layer controller detects that a resource is released, if a second transport path that can satisfy the service demand is acquired based on an available network resource, the network layer controller reports the second transport path to the application layer controller, and reserves the network resource for the second transport path, so that the application layer controller can select one path the first transport path and the second transport path as a new target transport path; and after receiving the new target transport path sent by the application layer controller, the network layer controller releases a network resource reserved for the transport path that is not selected as the new target transport path, thereby implementing real-time monitoring of a path resource in a network, so that a path resource used to transport a scheduled service is optimal.

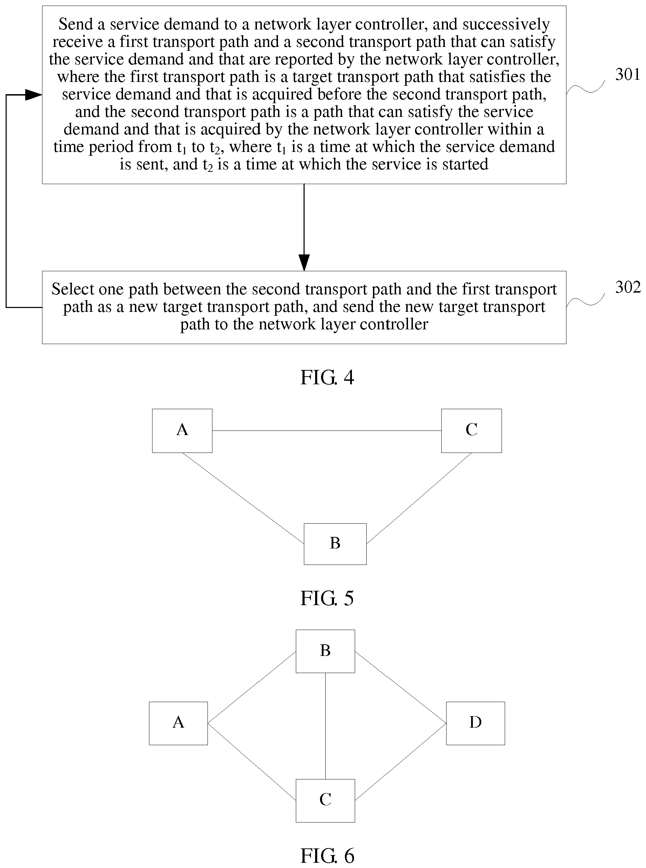

FIG. 4 is a flowchart of Embodiment 3 of a scheduled service processing method according to the present invention. As shown in FIG. 4, the method provided in this embodiment may be specifically implemented by an application layer controller, and the method may specifically include:
S301: Send a service demand to a network layer controller, and successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started.
S302: Select one path between the second transport path and the first transport path as a new target transport path, and send the new target transport path to the network layer controller.

The service demand includes at least the time t₂ at which the service is started, a time t₃ at which the service is finished, a requested bandwidth resource, information about a source node, and information about at least one destination node. When the application layer controller sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

According to the scheduled service processing method provided in this embodiment, a service demand is sent to a network layer controller; a first transport path and a second transport path that can satisfy the service demand and that are reported by the network layer controller are successively received; and one of the second transport path and the first transport path is selected as a new target transport path, and the new target transport path is sent to the network layer controller, so that a path resource used to transport a scheduled service is optimal.

The scheduled service processing method provided in the present invention is described in detail in the following by using specific embodiments.

FIG. 5 is a diagram of a network topology according to Embodiment 4 of the present invention. It is assumed that an application scenario in this embodiment is: At a time t₁, an application layer controller generates a service demand: establishing a transport service from node A to node C within a time interval from t₂ to t₃. In this embodiment, a destination node is uniquely specified, that is, node C is specified as the destination node. As can be known from the network topology in FIG. 5, there are two transport paths from node A to node C, which are a preferred transport path A-C and a sub-optimal transport path A-B-C. It is assumed that at the time t₁, the transport path A-C is occupied.

In a specific implementation process, at the time t₁, the application layer controller generates a scheduled service demand, which requires that service transport from node A to node C is completed within the time interval from t₂ to t₃. The service demand is sent to a network layer controller via a northbound interface. The service demand includes information about a source node, information about a destination node, and a requested bandwidth resource, and should also include the time t₂ at which the service demand is started and the time t₃ at which the service demand is finished, that is, the service demand should not be started earlier than the time t₂, and should not be finished later than the time t₃.

Because the preferred transport path A-C is occupied, the network layer controller allocates, according to a network resource status at the time t₁, the transport path A-B-C to complete the service demand, that is, uses the transport path A-B-C as a first transport path, reports the first transport path to the application layer controller via the northbound interface, and reserves a network resource for the first transport path. The report message may include resource reservation success information, information about a source node, and information about a destination node; or the report message may include resource reservation success information and the specific path.

Within a time interval from t₁ to t₂, if the network layer controller detects that a resource on the transport path A-C is released, where it is assumed that the time is t', the network layer controller detects, by using a network optimization module, whether a preferred transport path exists for the service demand, that is, whether a new second transport path that can satisfy the service demand exists; if the preferred transport path exists, the network layer controller reports the preferred transport path to the application layer controller via the northbound interface, and reserves a network resource for the preferred transport path. The report message may include information about a source node, information about a destination node, and a requested bandwidth resource; or the report message may include a requested bandwidth resource and the specific path. Optionally, the report message may further include a network parameter such as a quantity of hops, latency, or jitter.

The application layer controller receives the preferred transport path sent by the network layer controller, and selects one of the sub-optimal transport path A-B-C and the preferred transport path A-C as a new target transport path, that is, the application layer controller determines whether to use the preferred transport path for transport, and sends the selected new target transport path to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node or the specific path, which is not limited in this embodiment.

A network layer controller receives a new target transport path sent by an application layer controller, and releases a network resource reserved for the transport path that is not selected as the new target transport path; and within a time interval from t₁ to t₂, if detecting a resource on a transport path is released, the network layer controller executes the foregoing process repeatedly until the time t₂ arrives, and executes service transport according to the target transport path.

A person skilled in the art may understand that in this embodiment, communication between the application layer controller and the network layer controller via a northbound interface may be implemented by using the application layer traffic optimization (Application Layer Traffic Optimization, ALTO for short) protocol or the Openflow (Openflow) protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

FIG. 6 is a diagram of a network topology according to Embodiment 5 of the present invention. As shown in FIG. 6, it is assumed that a priority sequence of transport paths from node A to node C is: an optimal transport path A-C, a sub-optimal transport path A-B-C, and a worst transport path A-B-D-C; and it is assumed that a priority sequence of transport paths from node B to node C is: an optimal transport path B-C, a sub-optimal transport path B-A-C, and a worst transport path B-D-C. It is assumed that a network status at a time t₁ is: The transport path A-C is occupied, and the rest are idle transport paths. The following service demands are generated successively at the time t₁:
R₁: It is required that a transport time interval is t₂ to t₃, and that a service is transported from node A to node C; and
R2: It is required that a transport time interval is t₂ to t₃, and that a service is transported from node B to node C.

In a specific implementation process, at the time t₁, an application layer controller generates scheduled service demands R₁ and R₂, and sends R₁ and R₂ to a network layer controller via a northbound interface, where the service demands include information about source nodes, information about destination nodes, requested bandwidth resources, the time t₂ at which the service demands are started, and the time t₃ at which the service demands are finished; that is, the service demands should not be started earlier than the time t₂, and should not be finished later than the time t₃.

The network layer controller successively allocates a solution for R₁ and a solution for R₂ according to a network resource status at the time t₁. According to a current network resource condition, because the transport path A-C is occupied, a solution for R₁ is the sub-optimal transport path A-B-C, that is, the transport path A-B-C is used as a first transport path for R₁; because both the optimal transport path B-C and the sub-optimal transport path B-A-C are reserved for R₁ and cannot be used for R₂, a solution for R₂ is the worst transport path B-D-C, that is, the transport path B-D-C is used as a first transport path for R₂. The network layer controller reports the foregoing solutions to the application layer controller via the northbound interface, and separately reserves network resources for the first transport paths for R₁ and R₂. The report message may include resource reservation success information, information about a source node, and information about a destination node; or the report message may include resource reservation success information and the specific path.

In a time interval from t₁ to t₂, if the network layer controller detects that a resource on the transport path A-C is released, where it is assumed that the time is t', the network layer controller successively checks, by using a network optimization module, whether a preferred transport path for the service demand R1 and a preferred transport path for the service demand R2 exist, that is, whether new second transport paths that can satisfy the service demands exist; if the preferred transport paths exist, the network layer controller reports the preferred transport paths to the application layer controller via the northbound interface, and reserves network resources for the preferred transport paths. It is first detected that the preferred transport path A-C for R₁ exists; therefore, the network layer controller reports the preferred transport path to the application layer controller via the northbound interface, and reserves network resources of the transport path A-C and the transport path A-B-C. The report message may include information about a source node, information about a destination node, and a requested bandwidth resource; or the report message may include a requested bandwidth resource and the specific path. Optionally, the report message may further include a network parameter, such as a quantity of hops, latency, or jitter.

The application layer controller receives the preferred transport path, which is sent by the network layer controller, for R₁, and selects one of the sub-optimal transport path A-B-C and a preferred transport path A-C as a new target transport path, that is, the application layer controller determines whether to use the preferred transport path for transport; if determining to use the preferred transport path A-C for service transport, the application layer controller sends the selected preferred transport path A-C to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node on the target transport path or the specific path, which is not limited in this embodiment.

The network layer controller receives the preferred transport path A-C, which is sent by the application layer controller, for R₁, and releases a resource that no longer needs to be reserved for the transport path A-B-C; when detecting that the network resource on the transport path A-B-C is released, the network optimization module in the network layer controller finds that a preferred transport path B-C for R₂ is required to appear; the network layer controller reports the preferred transport path to the application layer controller, and reserves a resource for the transport path B-C and a resource for the transport path B-D-C; the application layer controller receives the preferred transport path B-C sent by the network layer controller, determines to use the preferred path B-C for transport, and sends the selected preferred transport path B-C to the network layer controller via the northbound interface.

The network layer controller receives the preferred transport path B-C, which is sent by the application layer controller, for R₂, and releases a resource that no longer needs to be reserved for the transport path B-D-C; and within the time interval from t₁ to t₂, if detecting a resource on a transport path is released, the network layer controller executes the foregoing process repeatedly until the time t₂, and executes service transport according to the target transport path.

It should be noted that the foregoing processes for detecting whether preferred transport paths exist for R₁ and R₂ are independent from each other, and do not affect each other.

A person skilled in the art may understand that in this embodiment, communication between the application layer controller and the network layer controller via the northbound interface may be implemented by using the ALTO protocol or the Openflow protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

This embodiment is described by using a network topology same as that in Embodiment 5. As shown in FIG. 6, it is assumed that a network status at a time t₁ is: A transport path A-C is occupied, and the rest are idle transport paths. At the time t₁, a service demand is sent: establishing a transport service from node A to node C or from node A to node D within a time interval from t₂ to t₃.

In a specific implementation process, at the time t₁, an application layer controller generates a scheduled service demand, which requires that service transport from node A to node C or from node A to node D is completed from t₂ to t₃. The service demand is sent to a network layer controller via a northbound interface. The service demand includes information about a source node, information about a destination node, and a requested bandwidth resource, and should also include the time t₂ at which the service demand is started and the time t₃ at which the service demand is finished, that is, the service demand should not be started earlier than the time t₂, and should not be finished later than the time t₃.

Because the transport path A-C is occupied, the network layer controller selects, according to the network resource condition at the time t₁, another destination node D, and allocates a sub-optimal transport path A-B-D to complete the service demand, that is, uses the transport path A-B-D as a first transport path, reports the first transport path to the application layer controller via the northbound interface, and reserves a network resource for the transport path A-B-D. The report message may include resource reservation success information, information about a source node, and information about a destination node; or the report message may include resource reservation success information and the specific path.

Within a time interval from t₁ to t₂, if the network layer controller detects that a resource on the transport path A-C is released, where it is assumed that the time is t', the network layer controller checks, by using a network optimization module, whether a preferred transport path exists for the service demand, that is, whether a new second transport path that can satisfy the service demand exists, and if finding that the preferred transport path A-C exists, the network layer controller reports the preferred transport path A-C to the application layer controller via the northbound interface, and reserves a network resource for the preferred transport path A-C. The report message may include information about a source node, information about a destination node, and a requested bandwidth resource; or the report message may include a requested bandwidth resource and the specific path. Optionally, the report message may further include a network parameter such as a quantity of hops, latency, or jitter. The information about the destination node may be the same as or different from that reported at the time t₁.

The application layer controller receives the preferred transport path sent by the network layer controller, and selects one of the sub-optimal transport path A-B-D and the preferred transport path A-C as a new target transport path, that is, the application layer controller determines whether to use the preferred transport path for transport, and if selecting the preferred transport path A-C, the application layer controller sends the preferred transport path A-C to the network layer controller via the northbound interface. A format of a sent message may be: a number of a transport solution corresponding to the first transport path or the second transport path, acceptance or rejection of the preferred transport path, or specific information of the selected target transport path, such as information about a source node on the target transport path and information about a destination node on the target transport path or the specific path, which is not limited in this embodiment.

The network layer controller receives the preferred transport path A-C sent by the application layer controller, and releases the network resource reserved for the sub-optimal transport path A-B-D; and within the time interval from t₁ to t₂, if detecting a resource on a transport path is released, the network layer controller executes the foregoing process repeatedly until the time t₂, and executes service transport according to a target transport path.

A person skilled in the art may understand that in this embodiment, communication between the application layer controller and the network layer controller via the northbound interface may be implemented by using the ALTO protocol or the Openflow protocol, or communication may be implemented by using signaling or a message, which is not limited in this embodiment.

In this embodiment, within a time interval from t₁ to t₂, a network layer controller detects whether a preferred transport path exists; if the preferred transport path exists, the network layer controller sends the preferred transport path to an application layer controller via a northbound interface, so that the application layer controller can select one path between the preferred transport path and a sub-optimal transport path as a new target transport path, and sends the new target transport path to the network layer controller, so that a path resource used to transport a scheduled service is optimal.

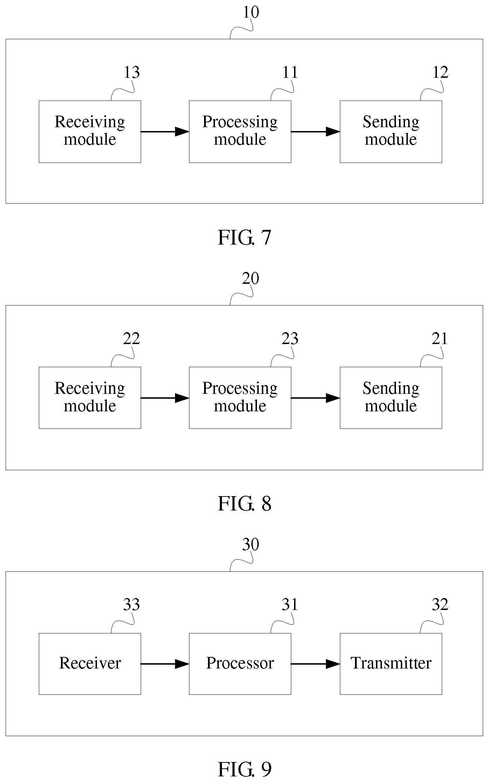

FIG. 7 is a schematic structural diagram of Embodiment 1 of a network layer controller according to the present invention. As shown in FIG. 7, the network layer controller 10 provided in this embodiment may include:
a processing module 11, configured to: within a time interval from t₁ to t₂, if a second transport path that can satisfy a service demand is acquired based on an available network resource, reserve the network resource for the second transport path, and transport the service by using a new target transport path;
a sending module 12, configured to report the second transport path to an application layer controller, so that the application layer controller can select one path between the second transport path and a first transport path as the new target transport path; and
a receiving module 13, configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

When the processing module 11 reports the second transport path to the application layer controller, a report message may carry information about a source node, information about a destination node, and a requested bandwidth resource; or a report message carries a requested bandwidth resource and the specific path, and optionally, may further include latency, jitter, or a quantity of hops. A network parameter of the second transport path is better than that of the first transport path, for example, regarding the network parameter, the second transport path has less hops and/or shorter latency than the first transport path, which is not limited in this embodiment.

Within the time interval from t₁ to t₂, if detecting that a resource on a transport path is released, the network layer controller repeatedly detects whether there is a new second transport path that can satisfy the service demand until the time t₂ arrives, and executes service transport according to the target transport path.

The network layer controller provided in this embodiment may be configured to execute the technical solutions of the method embodiments. An implementation principle and a technical effect of the network layer controller are similar to those of the foregoing method embodiments, and details are not described herein.

FIG. 8 is a schematic structural diagram of Embodiment 1 of an application layer controller according to the present invention. As shown in FIG. 8, the application layer controller 20 provided in this embodiment may include:
a sending module 21, configured to send a service demand to a network layer controller, and send a new target transport path to the network layer controller;
a receiving module 22, configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
a processing module 23, configured to select one path between the second transport path and the first transport path as the new target transport path.

The service demand includes at least the time t₂ at which the service is started, a time t₃ at which the service is finished, a requested bandwidth resource, information about a source node, and information about at least one destination node. When the sending module 21 sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

The application layer controller provided in this embodiment may be configured to execute the technical solutions of the method embodiments. An implementation principle and a technical effect of the network layer controller are similar to those of the foregoing method embodiments, and details are not described herein.

FIG. 9 is a schematic structural diagram of Embodiment 2 of a network layer controller according to the present invention. As shown in FIG. 9, the network layer controller 30 provided in this embodiment may include a processor 31, a transmitter 32, and a receiver 33.

The processor 31 is configured to: within a time interval from t₁ to t₂, if a second transport path that can satisfy a service demand is acquired based on an available network resource, reserve the network resource for the second transport path, and transport the service by using a new target transport path;
the transmitter 32 is configured to report the second transport path to an application layer controller, so that the application layer controller can select one path between the second transport path and a first transport path as the new target transport path; and
the receiver 33 is configured to receive the new target transport path sent by the application layer controller, where
t₁ is a time at which the application layer controller sends the service demand, t₂ is a time at which the service is started, and the first transport path is a target transport path that satisfies the service demand and that is acquired before the second transport path.

When the transmitter 32 reports the second transport path to the application layer controller, a report message may carry information about a source node, information about a destination node, and a requested bandwidth resource; or a report message carries a requested bandwidth resource and the specific path, and optionally, may further include latency, jitter, or a quantity of hops. A network parameter of the second transport path is better than that of the first transport path, for example, regarding the network parameter, the second transport path has less hops and/or shorter latency than the first transport path, which is not limited in this embodiment.

Within the time interval from t₁ to t₂, if detecting that a resource on a transport path is released, the network layer controller repeatedly detects whether there is a second transport path that can satisfy the service demand until the time t₂ arrives, and executes service transport according to the target transport path.

The network layer controller provided in this embodiment may be configured to execute the technical solutions of the method embodiments. An implementation principle and a technical effect of the network layer controller are similar to those of the foregoing method embodiments, and details are not described herein.

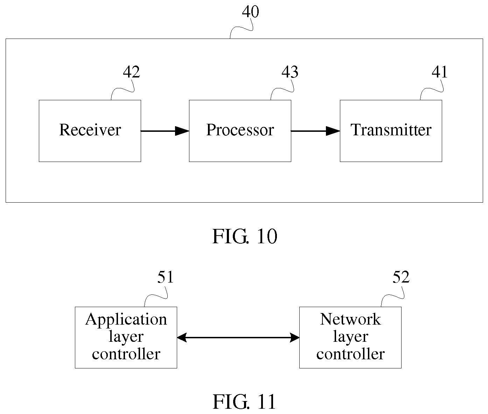

FIG. 10 is a schematic structural diagram of Embodiment 2 of an application layer controller according to the present invention. As shown in FIG. 10, the application layer controller 40 provided in this embodiment may include a transmitter 41, a receiver 42, and a processor 43.

The transmitter 41 is configured to send a service demand to a network layer controller, and send a new target transport path to the network layer controller;
the receiver 42 is configured to successively receive a first transport path and a second transport path that can satisfy the service demand and that are reported by the network layer controller, where the first transport path is a target transport path that satisfies the service demand and that is acquired before the second transport path, and the second transport path is a path that can satisfy the service demand and that is acquired by the network layer controller within a time interval from t₁ to t₂, where t₁ is a time at which the service demand is sent, and t₂ is a time at which the service is started; and
the processor 43 is configured to select one path between the second transport path and the first transport path as the new target transport path.

The service demand includes at least the time t₂ at which the service is started, a time t₃ at which the service is finished, a requested bandwidth resource, information about a source node, and information about at least one destination node. When the transmitter 41 sends the selected new target transport path to the network layer controller, a form of a sent message may be: a number of a transport solution corresponding to the first transport path or the second transport path, acceptance or rejection of the second transport path, or specific information of the selected target transport path, such as information about a source node on the target transport path and information about a destination node on the target transport path or the specific path, which is not limited in this embodiment.

The application layer controller provided in this embodiment may be configured to execute the technical solutions of the method embodiments. An implementation principle and a technical effect of the network layer controller are similar to those of the foregoing method embodiment, and details are not described herein.

FIG. 11 is a schematic structural diagram of a scheduled service processing system according to the present invention. As shown in FIG. 11, the scheduled service processing system provided in this embodiment includes: a network layer controller 52 and an application layer controller 51.

The network layer controller 52 includes a processing module, a sending module, and a receiving module. For specific content, refer to the processing module 11, the sending module 12, and the receiving module 13 in the network layer controller 10 in the foregoing embodiment, and details are not provided herein again.

The application layer controller 51 includes a processing module, a sending module, and a receiving module. For specific content, refer to the processing module 23, the sending module 21, and the receiving module 22 in the application layer controller 20 in the foregoing embodiment, and details are not provided herein again.

According to the scheduled service processing system provided in this embodiment, an application layer controller sends a scheduled service demand to a network layer controller; after receiving the scheduled service demand, the network layer controller reports a first transport path that can satisfy the service demand to the application layer controller; before the service demand is started, when the network layer controller detects that a resource is released, if the network layer controller can acquire a second transport path that satisfies the service demand, the network layer controller reports the second transport path to the application layer controller, so that the application layer controller selects a new target transport path and sends the new target transport path to the network layer controller; and after receiving the new target transport path, the network layer controller releases a network resource reserved for the transport path that is not selected as the new target transport path, thereby implementing real-time monitoring of a path resource in a network, so that a path resource used to transport a scheduled service is optimal.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, refer to a corresponding process in the foregoing method embodiments, and details are not described herein again.

## Claims

1. A scheduled service processing method, comprising:
within a time interval from t₁ to t₂, if a second transport path that can satisfy a service demand is acquired based on an available network resource, reserving, by a network layer controller, the network resource for the second transport path, and reporting, by the network layer controller, the second transport path to an application layer controller, so that the application layer controller can select one path between the second transport path and a first transport path as a target transport path (101); and
receiving, by the network layer controller, the target transport path sent by the application layer controller, and transporting the service by using the target transport path (102), wherein
t₁ is a time at which the application layer controller sends the service demand, t₂ is a time at which the service is started, and the first transport path is a transport path that satisfies the service demand and that is acquired before the second transport path.

2. The method according to claim 1, wherein after the receiving the target transport path sent by the application layer controller, the method further comprises:
releasing a network resource reserved for the transport path that is not selected as the target transport path.

3. The method according to claim 1 or 2, wherein the method further comprises:
receiving the service demand that is sent by the application layer controller at the time t₁, wherein the service demand comprises at least the time t₂ at which the service is started, a time t₃ at which the service is finished, a requested bandwidth resource, information about a source node, and information about at least one destination node; and
acquiring the first transport path that can satisfy the service demand, reserving a network resource for the first transport path, and reporting the first transport path to the application layer controller.

4. A scheduled service processing method, comprising:
sending, by an application layer controller, a service demand to a network layer controller, and successively receiving, by the application layer controller, a first transport path and a second transport path that can satisfy the service demand and that are reported by the network layer controller, wherein the first transport path is a transport path that satisfies the service demand and that is acquired before the second transport path, and the second transport path is a path that can satisfy the service demand and that is acquired by the network layer controller within a time interval from t₁ to t₂, wherein t₁ is a time at which the service demand is sent, and t₂ is a time at which the service is started (301); and
selecting, by the application layer controller, one of the second transport path and the first transport path as a target transport path, and sending, by the application layer controller, the target transport path to the network layer controller (302).

5. The method according to claim 4, wherein the service demand comprises at least the time t₂ at which the service is started, a time t₃ at which the service is finished, a requested bandwidth resource, information about a source node, and information about at least one destination node.

6. A network layer controller, comprising:
a processing module (11), configured to: within a time interval from t₁ to t₂, if a second transport path that can satisfy a service demand is acquired based on an available network resource, reserve the network resource for the second transport path, and transport the service by using a target transport path;
a sending module (12), configured to report the second transport path to an application layer controller, so that the application layer controller can select one path between the second transport path and the first transport path as the target transport path; and
a receiving module (13), configured to receive the target transport path sent by the application layer controller, wherein
t₁ is a time at which the application layer controller sends the service demand, t₂ is a time at which the service is started, and the first transport path is a transport path that satisfies the service demand and that is acquired before the second transport path.

7. The network layer controller according to claim 6, wherein the processing module is further configured to:
release a network resource reserved for a transport path that is not selected as the target transport path.

8. The network layer controller according to claim 6 or 7, wherein the receiving module is further configured to receive the service demand that is sent by the application layer controller at the time t₁, wherein the service demand comprises at least the time t₂ at which the service is started, a time t₃ at which the service is finished, a requested bandwidth resource, information about a source node, and information about at least one destination node; and
the processing module is further configured to acquire the first transport path that can satisfy the service demand, and reserve a network resource for the first transport path, and the sending module is further configured to report the first transport path to the application layer controller.

9. An application layer controller, comprising:
a sending module (21), configured to send a service demand to a network layer controller, and send a target transport path to the network layer controller;
a receiving module (22), configured to successively receive a first transport path and a second transport path that can satisfy the service demand and that are reported by the network layer controller, wherein the first transport path is a transport path that satisfies the service demand and that is acquired before the second transport path, and the second transport path is a path that can satisfy the service demand and that is acquired by the network layer controller within a time interval from t₁ to t₂, wherein t₁ is a time at which the service demand is sent, and t₂ is a time at which the service is started; and
a processing module (23), configured to select one path between the second transport path and the first transport path as the target transport path.

10. The application layer controller according to claim 9, wherein the service demand comprises at least the time t₂ at which the service is started, a time t₃ at which the service is finished, a requested bandwidth resource, information about a source node, and information about at least one destination node.

11. A scheduled service processing system, wherein the system comprises at least the network layer controller according to claim 6, 7, or 8 and the application layer controller according to claim 9 or 10.

## Patentansprüche

1. Terminiertes Dienstverarbeitungsverfahren, umfassend:
innerhalb eines Zeitintervalls von t₁ bis t₂, wenn ein zweiter Transportweg, der eine Dienstanforderung befriedigen kann, basierend auf einem verfügbaren Netzwerkbetriebsmittel erlangt wird, Reservieren, durch eine Netzwerkschicht-Steuerung, des Netzwerkbetriebsmittels für den zweiten Transportweg und Berichten, durch die Netzwerkschicht-Steuerung, des zweiten Transportwegs an eine Anwendungsschicht-Steuerung, so dass die Anwendungsschicht-Steuerung einen Weg aus dem zweiten Transportweg und einem ersten Transportweg als einen Zieltransportweg (101) auswählen kann; und
Empfangen, durch die Netzwerkschicht-Steuerung, des durch die Anwendungsschicht-Steuerung gesandten Zieltransportwegs und Transportieren des Diensts unter Verwendung des Zieltransportwegs (102), wobei t₁ eine Zeit ist, zu der die Anwendungsschicht-Steuerung die Dienstanforderung sendet, t₂ eine Zeit ist, zu der der Dienst gestartet wird, und der erste Transportweg ein Transportweg ist, der die Dienstanforderung befriedigt und der vor dem zweiten Transportweg erlangt wird,

2. Verfahren nach Anspruch 1, wobei das Verfahren, nach dem Empfangen des durch die Anwendungsschicht-Steuerung gesandten Zieltransportwegs, ferner umfasst:
Freigeben eines für den Transportweg, der nicht als der Zieltransportweg ausgewählt wird, reservierten Netzwerkbetriebsmittels.

3. Verfahren nach Anspruch 1 oder 2, wobei das Verfahren ferner umfasst:
Empfangen der Dienstanforderung, die durch die Anwendungsschicht-Steuerung zu der Zeit t₁ gesandt wird, wobei die Dienstanforderung mindestens die Zeit t₂, zu der der Dienst gestartet wird, eine Zeit t₃, zu der der Dienst beendet wird, ein angefordertes Bandbreitenbetriebsmittel, Informationen über einen Ausgangsknoten und Informationen über mindestens einen Bestimmungsknoten umfass; und
Erlangen des ersten Transportwegs, der die Dienstanforderung befriedigen kann, Reservieren eines Netzwerkbetriebsmittels für den ersten Transportweg und Berichten des ersten Transportwegs an die Anwendungsschicht-Steuerung.

4. Terminiertes Dienstverarbeitungsverfahren, umfassend:
Senden, durch eine Anwendungsschicht-Steuerung, einer Dienstanforderung an eine Netzwerkschicht-Steuerung und anschließendes Empfangen, durch die Anwendungsschicht-Steuerung, eines ersten Transportwegs und eines zweiten Transportwegs, die die Dienstanforderung befriedigen können und die durch die Netzwerkschicht-Steuerung berichtet werden, wobei der erste Transportweg ein Transportweg ist, der die Dienstanforderung befriedigt und der vor dem zweiten Transportweg erlangt wird, und der zweite Transportweg ein Weg ist, der die Dienstanforderung befriedigen kann und der durch die Netzwerkschicht-Stcuerung innerhalb eines Zeitintervalls von t₁ bis t₂ erlangt wird, wobei t₁ eine Zeit ist, zu der die Dienstanforderung gesandt wird, und t₂ eine Zeit ist, zu der der Dienst gestartet wird (301); und
Auswählen, durch die Anwendungsschicht-Steuerung, eines des zweiten Transportwegs und des ersten Transportwegs als einen Zieltransportweg und Senden, durch die Anwendungsschicht-Steuerung, des Zieltransportwegs an die Netzwerkschicht-Steuerung (302).

5. Verfahren nach Anspruch 4, wobei die Dienstanforderung mindestens die Zeit t₂, zu der der Dienst gestartet wird, eine Zeit t₃, zu der der Dienst beendet wird, ein angefordertes Bandbreitenbetriebsmittet, Informationen über einen Ausgangsknoten und Informationen über mindestens einen Bestimmungsknoten umfasst.

6. Netzwerkschicht-Steuerung, umfassend:
ein Verarbeitungsmodul (11), konfiguriert zum: innerhalb eines Zeitintervalls von t₁ bis t₂, wenn ein zweiter Transportweg, der eine Dienstanforderung befriedigen kann, basierend auf einem verfügbaren Netzwerkbetriebsmittel erlangt wird, Reservieren des Netzwerkbetriebsmittels für den zweiten Transportweg und Transportieren des Diensts unter Verwendung eines Zieltransportwegs;
ein Sendemodul (12), konfiguriert zum Berichten des zweiten Transportwegs an eine Anwendungsschicht-Steuerung, so dass die Anwendungsschicht-Steuerung einen Weg aus dem zweiten Transportweg und dem ersten Transportweg als einen Zieltransportweg auswählen kann; und
ein Empfangsmodul (13), konfiguriert zum Empfangen des durch die Anwendungsschicht-Steuerung gesandten Zieltransportwegs, wobei
t₁ eine Zeit ist, zu der die Anwendungsschicht-Steuerung die Dienstanforderung sendet, t₂ eine Zeit ist, zu der der Dienst gestartet wird, und der erste Transportweg ein Transportweg ist, der die Dienstanforderung befriedigt und der vor dem zweiten Transportweg erlangt wird.

7. Netzwerkschicht-Steuerung nach Anspruch 6, wobei das Verarbeitungsmodul ferner konfiguriert ist zum:
Freigeben eines für den Transportweg, der nicht als der Zieltransportweg ausgewählt wird, reservierten Netzwerkbetriebsmittels.

8. Netzwerkschicht-Steuerung nach Anspruch 6 oder 7, wobei das Empfangsmodul ferner konfiguriert ist zum Empfangen der Dienstanforderung, die durch die Anwendungsschicht-Steuerung zu der Zeit t₁ gesandt wird, wobei die Dienstanforderung mindestens die Zeit t₂, zu der der Dienst gestartet wird, eine Zeit t₃, zu der der Dienst beendet wird, ein angefordertes Bandbreitenbetriebsmittel, Informationen über einen Ausgangsknoten und Informationen über mindestens einen Bestimmungsknoten umfasst; und
wobei das Verarbeitungsmodul ferner konfiguriert ist zum Erlangen des ersten Transportwegs, der die Dienstanforderung befriedigen kann, und Reservieren eines Netzwerkbetriebsmittels für den ersten Transportweg und das Sendemodul ferner konfiguriert ist zum Berichten des ersten Transportwegs an die Anwendungsschicht-Steuerung.

9. Anwendungsschicht-Steuerung, umfassend:
ein Sendemodul (21), konfiguriert zum Senden einer Dienstanforderung an eine Netzwerkschicht-Steuerung und Senden eines Zieltransportwegs an die Netzwerkschicht-Stcuerung;
ein Empfangsmodul (22), konfiguriert zum anschließenden Empfangen eines ersten Transportwegs und eines zweiten Transportwegs, die die Dienstanforderung befriedigen können und die durch die Netzwerkschicht-Steuerung berichtet werden, wobei der erste Transportweg ein Transportweg ist, der die Dienstanforderung befriedigt und der vor dem zweiten Transportweg erlangt wird, und der zweite Transportweg ein Weg ist, der die Dienstanforderung befriedigen kann und der durch die Netzwerkschicht-Steuerung innerhalb eines Zeitintervalls von t₁ bis t₂ erlangt wird, wobei t₁ eine Zeit ist, zu der die Dienstanforderung gesandt wird, und t₂ eine Zeit ist, zu der der Dienst gestartet wird; und
ein Verarbeitungsmodul (23), konfiguriert zum Auswählen eines Wegs aus dem zweiten Transportweg und dem ersten Transportweg als den Zieltransportweg.

10. Anwendungsschicht-Steuerung nach Anspruch 9, wobei die Dienstanforderung mindestens die Zeit t₂, zu der der Dienst gestartet wird, eine Zeit t₃, zu der der Dienst beendet wird, ein angefordertes Bandbreitenbetriebsmittel, Informationen über einen Ausgangsknoten und Informationen über mindestens einen Bestimmungsknoten umfasst.

11. Terminiertes Dienstverarbeitungssystem, wobei das System mindestens die Netzwerkschicht-Stcuerung nach Anspruch 6, 7 oder 8 und die Anwendungsschicht-Steuerung nach Anspruch 9 oder 10 umfasst.

## Revendications

1. Procédé de traitement de service planifié, comprenant les étapes suivantes :
dans un intervalle de temps allant de t₁ à t₂, si un deuxième chemin de transport qui peut satisfaire une demande de service est acquis sur la base d'une ressource réseau disponible, réserver, par un contrôleur de couche réseau, la ressource réseau pour le deuxième chemin de transport, et transmettre, par le contrôleur de couche réseau, le deuxième chemin de transport à un contrôleur de couche d'application, afin que le contrôleur de couche d'application puisse sélectionner un chemin entre le deuxième chemin de transport et un premier chemin de transport comme un chemin de transport cible (101) ; et
recevoir, par le contrôleur de couche réseau, le chemin de transport cible envoyé par le contrôleur de couche d'application, et transporter le service en utilisant le chemin de transport cible (102),
t₁ étant un temps auquel le contrôleur de couche d'application envoie la demande de service, t₂ étant un temps auquel le service est démarré, et le premier chemin de transport étant un chemin de transport qui satisfait la demande de service et qui est acquis avant le deuxième chemin de transport.

2. Procédé selon la revendication 1 dans lequel, après l'étape de réception du chemin de transport cible envoyé par le contrôleur de couche d'application, le procédé comprend en outre :
libérer une ressource réseau réservée pour le chemin de transport qui n'est pas sélectionné comme le chemin de transport cible.

3. Procédé selon la revendication 1 ou 2, dans lequel le procédé comprend en outre :
recevoir la demande de service qui est envoyée par le contrôleur de couche d'application au temps t₁, la demande de service comportant au moins le temps t₂ auquel le service est démarré, un temps t₃ auquel le service est fini, une ressource de bande passante demandée, des informations concernant un noeud source, et des informations concernant au moins un noeud de destination ; et
acquérir le premier chemin de transport qui peut satisfaire la demande de service, réserver une ressource réseau pour le premier chemin de transport, et transmettre le premier chemin de transport au contrôleur de couche d'application.

4. Procédé de traitement de service planifié, comprenant :
envoyer, par un contrôleur de couche d'application, une demande de service à un contrôleur de couche réseau, et recevoir successivement, par le contrôleur de couche d'application, un premier chemin de transport et un deuxième chemin de transport qui peuvent satisfaire la demande de service et qui sont rapportés par le contrôleur de couche réseau, le premier chemin de transport étant un chemin de transport qui satisfait la demande de service et qui est acquis avant le deuxième chemin de transport, et le deuxième chemin de transport étant un chemin qui peut satisfaire la demande de service et qui est acquis par le contrôleur de couche réseau dans un intervalle de temps allant de t₁ à t₂, t₁ étant un temps auquel la demande de service est envoyée, et t₂ étant un temps auquel le service est démarré (301) ; et
sélectionner, par le contrôleur de couche d'application, un chemin parmi le deuxième chemin de transport et le premier chemin de transport comme un chemin de transport cible, et envoyer, par le contrôleur de couche d'application, le chemin de transport cible au contrôleur de couche réseau (302).

5. Procédé selon la revendication 4, dans lequel la demande de service comprend au moins le temps t₂ auquel le service est démarré, un temps t₃ auquel le service est fini, une ressource de bande passante demandée, des informations concernant un noeud source, et des informations concernant au moins un noeud de destination.

6. Contrôleur de couche réseau, comprenant :
un module de traitement (11), configuré pour : dans un intervalle de temps allant de t₁ à t₂, si un deuxième chemin de transport qui peut satisfaire une demande de service est acquis sur la base d'une ressource réseau disponible, réserver la ressource réseau pour le deuxième chemin de transport, et transporter le service en utilisant un chemin de transport cible ;
un module d'envoi (12), configuré pour transmettre le deuxième chemin de transport à un contrôleur de couche d'application, afin que le contrôleur de couche d'application puisse sélectionner un chemin entre le deuxième chemin de transport et le premier chemin de transport comme le chemin de transport cible ; et
un module de réception (13), configuré pour recevoir le chemin de transport cible envoyé par le contrôleur de couche d'application,
t₁ étant un temps auquel le contrôleur de couche d'application envoie la demande de service, t₂ étant un temps auquel le service est démarré, et le premier chemin de transport étant un chemin de transport qui satisfait la demande de service et qui est acquis avant le deuxième chemin de transport.

7. Contrôleur de couche réseau selon la revendication 6, dans lequel le module de traitement est en outre configuré pour :
libérer une ressource réseau réservée pour un chemin de transport qui n'est pas sélectionné comme le chemin de transport cible.

8. Contrôleur de couche réseau selon la revendication 6 ou 7, dans lequel le module de réception est en outre configuré pour recevoir la demande de service qui est envoyée par le contrôleur de couche d'application au temps t₁, la demande de service comportant au moins le temps t₂ auquel le service est démarré, un temps t₃ auquel le service est fini, une ressource de bande passante demandée, des informations concernant un noeud source, et des informations concernant au moins un noeud de destination ; et
le module de traitement est en outre configuré pour acquérir le premier chemin de transport qui peut satisfaire la demande de service, et réserver une ressource réseau pour le premier chemin de transport, et le module d'envoi est en outre configuré pour transmettre le premier chemin de transport au contrôleur de couche d'application.

9. Contrôleur de couche d'application, comprenant :
un module d'envoi (21), configuré pour envoyer une demande de service à un contrôleur de couche réseau, et envoyer un chemin de transport cible au contrôleur de couche réseau ;
un module de réception (22), configuré pour recevoir successivement un premier chemin de transport et un deuxième chemin de transport qui peuvent satisfaire la demande de service et qui sont transmis par le contrôleur de couche réseau, le premier chemin de transport étant un chemin de transport qui satisfait la demande de service et qui est acquis avant le deuxième chemin de transport, et le deuxième chemin de transport étant un chemin qui peut satisfaire la demande de service et qui est acquis par le contrôleur de couche réseau dans un intervalle de temps allant de t₁ à t₂, t₁ étant un temps auquel la demande de service est envoyée, et t₂ étant un temps auquel le service est démarré ; et
un module de traitement (23), configuré pour sélectionner un chemin entre le deuxième chemin de transport et le premier chemin de transport comme le chemin de transport cible.

10. Contrôleur de couche d'application selon la revendication 9, dans lequel la demande de service comprend au moins le temps t₂ auquel le service est démarré, un temps t₃ auquel le service est fini, une ressource de bande passante demandée, des informations concernant un noeud source, et des informations concernant au moins un noeud de destination.

11. Système de traitement de service planifié, dans lequel le système comprend au moins le contrôleur de couche réseau selon la revendication 6, 7, ou 8 et le contrôleur de couche d'application selon la revendication 9 ou 10:
